Europäisches Patentamt

European Patent Office

Office européen des brevets

(11) Publication number: **0 171 561**
**B1**

## (12) EUROPEAN PATENT SPECIFICATION

(45) Date of publication of patent specification: 27.04.88

(51) Int. Cl.⁴: **F 16 G 13/08**

(21) Application number: **85108021.8**

(22) Date of filing: **28.06.85**

(54) **Link chain.**

(30) Priority: **30.07.84 JP 115070/84**

(43) Date of publication of application:
**19.02.86 Bulletin 86/08**

(45) Publication of the grant of the patent:
**27.04.88 Bulletin 88/17**

(84) Designated Contracting States:
**DE FR GB IT NL**

(56) References cited:
**FR-A-2 394 720**
**US-A-1 451 625**
**US-A-1 631 237**

(73) Proprietor: **TSUBAKIMOTO CHAIN CO.**
**17-88, Tsurumi 4-chome Tsurumi-ku Osaka-shi**
**Osaka-fu 538 (JP)**

(72) Inventor: **Tsubakimoto, Yasumasa c/o**
**Tsubakimoto Chain Co.**
**17-88, Tsurumi 4-chome Tsurumi-ku**
**Osaka-shi, Osaka-fu (JP)**

(74) Representative: **Geyer, Werner, Dr.-Ing. et al**
**Patentanwälte GEYER, HAGEMANN &**
**PARTNER Postfach 860329 Ismaninger Strasse**
**108**
**D-8000 München 86 (DE)**

# Description

The invention relates to a link chain comprising a series of inner links, outer links and means connecting said inner and outer links for pivotal displacement about transverse axes, each inner link having an integral structure including a pair of side plates having an upper and a lower side margin and a pair of bushing means extending between the side plates and concentric with the transverse axes, adjacent outer links having end edges spaced apart to afford the pivotal displacement, and an outwardly projecting part integrally formed on each inner link, extending in the central longitudinal region of each outer surface of the side plates of the inner links and having end edges facing the end edges of adjacent outer links.

A link chain of this type is known from FR—A—2 394 720. Each outer link of this known chain is pivotably connected to the adjacent inner link by means of an ellongated slot being in positive engagement with an outwardly projecting end of a pin being arranged concentrically with a corresponding bushing means. In order to prevent undesired relative longitudinal displacement between the inner and the outer links, but also to keep a positive guidance for pivotal displacement, the outwardly projecting part on each side plate of this known chain is adapted to act as a stop means. For this purpose the end edges of the outwardly projecting part are adapted for frictional engagement with the facing end edges of the adjacent outer links to ensure a positive guidance of the end edges of the adjacent outer link. But the breaking strength of the central region of each inner link of this known chain is unfavourably low because of the inner link having a relatively small cross sectional area in its central longitudinal region for the transmission of chain tensions. Furthermore this known chain easily becomes worn since the sliding contact rear with the chain guide rail is relatively small.

Accordingly it is a primary object of this invention to provide a link chain which has increased breaking strength and improved wear-resistant properties in relation to the chain guide rail.

To this end, the invention provides a link chain of the type identified above in which such outwardly projecting part is provided at least in proximity of each upper and lower side margins and arranged such that a clearance is formed between the facing end edges of the projecting part and of the adjacent pivotable outer link, resp.

By virtue of the inventive arrangement, the provision of the outwardly projecting part in proximity of the side margins advantageously makes it possible to remarkably increase the breaking strength of the chains' structure with respect to the chain tension and at the same time to increase the sliding contact area in relation to the chain guide rail, thereby improving the wear-resistant properties.

The bushing means of the inventive chain advantageously comprise axial bores concentric to the transverse axes and the connecting means including pin means extending through these bores for pivotal displacement between inner and outer links.

In a preferred embodiment of the invention the end edges of the outer links have a part-circular shape concentric to the adjacent transverse axes, the projecting part extending along the side margins of the side plate, terminating at each end closely adjacent the end edge of the adjacent outer link and having a thickness corresponding to the thickness of the outer links thereby the outer surfaces of the outer links flush with the outer surfaces of the projecting part of the series of inner links.

Preferably the outermost perimeters of the projecting parts are chamferred. A further advantageous embodiment of the invention consists in that the outwardly projecting part comprises a strip along each side margin.

According to another improvement of the invention the outwardly projecting part extends across the whole width at the central longitudinal region of each side plate and the end edges of the projecting part have a concave circular shape concentric to the adjacent transverse axis, with the clearance between the facing end edges of the projecting part and the adjacent outer links being uniform along its extension.

A further preferred embodiment of the invention consists in the bushing means comprising cylindrical parts extending between the side plates and being spaced apart less than the length of extension of the projecting part along the side margins.

Also preferably the integral structure of the inner links is molded from plastic material.

The above and other objects, features and advantages of the present invention will become clear from the following description of preferred embodiments thereof in connection with the accompanying drawings.

Fig. 1 shows a part-sectional view of one embodiment of an inventive chain;

Fig. 2 shows a side elevational view of the embodiment shown in Fig. 1;

Fig. 3 shows a sectional view taken substantially along the line III—III of Fig. 2;

Fig. 4 shows a side elevational view of another embodiment of the present invention;

Fig. 5 shows a sectional view taken generally along the line V—V of Fig. 4, and

Fig. 6 shows a cross-sectional view of the first embodiment showing its engagement with a chain guide rail.

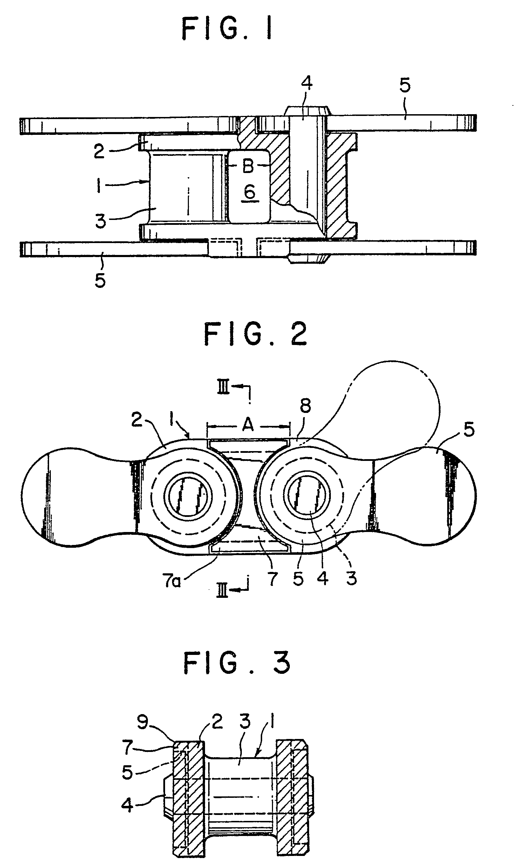

Referring first to Figs. 1 to 3, a link chain 1 has a pair of inner link side plates 2 and bushing means 3 which span between the side plates 2 and respectively define front and rear and transverse axes for pivotally connecting outer links 5 joined thereto. The inner links 2 and the bushing means 3 are integrally molded of a plastic, sintered alloy or cast material. The portions 2 and 3 of the inner chain 1 are connected to a pair of adjacent outer links 5 by means of pins 4 extending through the bushing parts 3. The structure 1 has a recess 6 engageable with the drive teeth of a driving sprocket (not shown) and which is formed between the front and rear bushing parts 3.

In accordance with the invention, an outwardly projecting part 7, whose outer surface is substantially flush with the outer surface of the adjacent outer links 5, is integrally molded with the inner link plates 2 such as to extend across its whole width at the central longitudinal region of each of the outer surfaces of the structure 1. Since the end edge of each of the outer links 5 forms an arc of circular shape concentric with the transverse axis of the adjacent pin 4, the outwardly projecting part 7 has a concave circular shape at each end which is concave and concentric with the end edge of the outer link 5 such as not to interfere with the outer link 5 when it is pivotally displaced on the pin 4. Along each of the side margins 8 of the inner link portion 2, the outwardly projecting part 7 has a longitudinal length 4 (Fig. 2) which well exceeds the longitudinal width B of the recess 6 (Fig. 1). Thus, the outwardly projecting part 7 has a general profile which has a cross sectional shape similar to that of a biconcave lens. Therefore, the longitudinal central region along the side margin 8 has a substantially doubled wall thickness by virtue of the outwardly projecting portion 7. Hence its breaking strength is doubled. Additionally, a chamfered portion 9 is formed along the outer perimeter of the outwardly projecting portion 7.

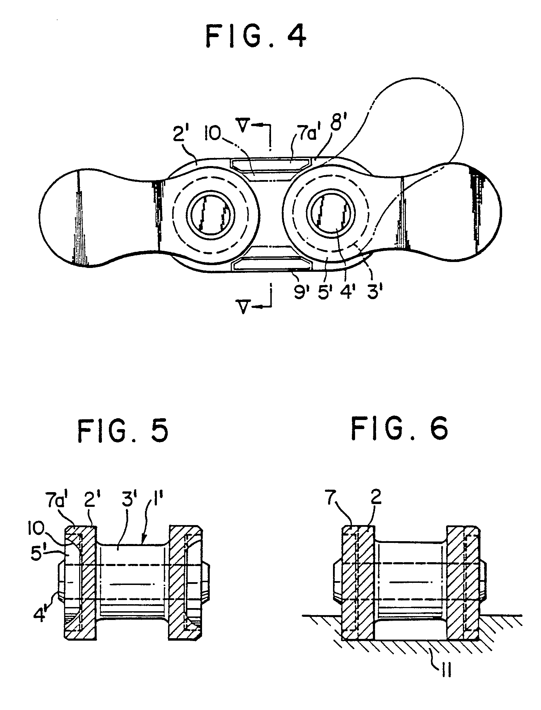

Figs. 4 and 5 in combination show another embodiment. In the embodiment shown in Fig. 2, the effect of the doubled breaking strength is substantially created by the marginal parts 7a of the outwardly projecting part 7, which parts are in proximity to the side margins 8 of the inner link 2. In Figs. 4 and 5 parts corresponding to those of Figs. 1—3 are identified with the same reference character with a prime ('). According to the embodiment shown in Fig. 4 in comparison to the embodiments shown in Fig. 2, all other parts excluding a strip 7a' along the edge of the side margin 8' and a fillet 10 on its inner side are therefore removed, whereby it is possible to reduce the amount of required materials without essentially decreasing the breaking strength.

Fig. 6 shows a chain to which the present invention is applied in a state wherein the chain slides in a track on a guide rail 11. As illustrated in Fig. 6, sliding contact is made between the guide rail 11 and the inner link part 2 whose thickness is doubled by virtue of the outwardly projecting part 7 or 7a, thereby increasing its sliding area (it shows an increase of approximately 1.7 times according to this embodiment). The thus increased sliding area improves the wear-resistant properties correspondingly. The chamfer 9 assists in the engagement of the chain assembly into the track of the rail 11.

The present invention has the above-described arrangement, which advantageously makes it possible to increase the breaking strength in relation to the chain tension and improve the wear-resistant properties with respect to the sliding motion of the guide rail. Moreover, the outwardly projecting portion 7 shown in the embodiment of Fig. 2 is flush with the outer link 5 and therefore decreases the irregularities on the outer surface of the chain, and forms a substantially continuous sliding contact area along each of the chain along both the upper and lower edges thereof. It should be noted that when the links are pivotally displaced on the axes of the pins 4, the clearance between the complementary arcuate end edges of the outer link and of the projecting parts remain substantially constant, avoiding any pinching action which might otherwise cause the chain to pick up and retain foreign matters. Hence, the amount of dust or other foreign matter adhering to the recessed regions of the link chain is reduced, and the chains of the present invention may suitably be employed in a food apparatus where sanitary conditions are a critical factor.

## Claims

1. A link chain comprising a series of inner links (1), outer links (5) and means connecting said inner and outer links (1; 5) for pivotal displacement about transverse axes (4), each inner link (1) having an integral structure including a pair of side plates (2) having an upper and a lower side margin (8) and a pair of bushing means (3) extending between the side plates (2) and concentric with the transverse axes (4), adjacent outer links (5) having end edges spaced apart to afford the pivotal displacement, and an outwardly projecting part (7; 7a) integrally formed on each inner link (1), extending in the central longitudinal region of each outer surface of the side plates (2) and having end edges facing the end edges of adjacent outer links (5), characterized in that such outwardly projecting part (7; 7a) is provided at least in proximity of each of the upper and lower side margins (8) and arranged such that a clearance is formed between the facing end edges of the projecting part (7; 7a) and of the adjacent pivotable outer links (5), resp.

2. A link chain according to claim 1, characterized in that the bushing means (3) have axial bores concentric with the transverse axes (4) and the connecting means includes pin means (4) extending through these bores.

3. A link chain according to claim 1 or 2, characterized in that the end edges of the outer links (5) have a part-circular shape concentric to the adjacent transverse axis (4), the projecting part (7) extending along the side margins (8) of the side plate (2) terminating at each end closely adjacent the end edge of the adjacent outer link (5) and having a thickness corresponding to the thickness of the outer link (5).

4. A link chain according to any one of claims 1 to 3, characterized in that the outermost perimeters of the projecting parts (7; 7a) are chamferred.

5. A link chain according to claims 3 or 4, characterized in that the outwardly projecting part comprises a strip (7a) along each side margin (8).

6. A link chain according to any one of claims 1 to 5, characterized in that the outwardly projecting part (7) extends across the whole width at the central longitudinal region of each side plate (2) and the end edges of the projecting part (7) have a concave circular shape concentric with the adjacent transverse axis (4), with the clearance between the facing end edges of the projecting part (7) and of the adjacent outer links (5) being uniform along its extension.

7. A link chain according to any one of claims 1 to 6, characterized in that the bushing means (3) comprise cylindrical parts extending between the side plates (3) and being spaced apart less than the length of extension of the projecting part (7; 7a) along the side margins (8).

8. A link chain according to any one of claims 1 to 7, characterized in that the integral structure of the inner links (1) is molded from plastic material.

## Patentansprüche

1. Gliederkette mit einer Reihe von Innengliedern (1), Außengliedern (5) und Einrichtungen zum Verbinden der Innen- und Außenglieder (1; 5) für verschwenkbar Bewegungen um Querachsen (4), wobei jedes Innenglied (1) eine integrale Struktur mit einem Paar Seitenplatten (2) mit einem oberen und einem unteren seitlichen Rand (8), ein Paar Buchsen (3), die zwischen den Seitenplatten (2) und konzentrisch zu den Querachsen (4) verlaufen, wobei benachbarte Außenglieder (5) mit im Abstand voneinander angeordneten Endkanten zur Ermöglichung der Verschwenkbewegung versehen sind, und ein nach außen vorstehendes Teil (7; 7a) aufweist, das einstückig an jedem Innenglied (1) ausgebildet ist, im mittleren Längsbereich jeder Außenfläche der Seitenplatten (2) verläuf und mit Endkanten versehen ist, die den Endkanten der benachbarten Außenglieder (5) zugewandt sind, dadurch gekennzeichnet, daß das nach außen vorstehende Teil (7; 7a) zumindest in der Nähe jeweils des unteren und des oberen Seitenrandes (8) vorgeshen und so angebracht ist, daß zwischen den jeweils einander zugewandten Endkanten des überstehenden Teiles (7; 7a) und des anliegenden verschwenkbaren Außenglides (5) ein Spalt ausgebildet wird.

2. Gliederkette nach Anspruch 1, dadurch gekennzeichnet, daß die Buchsen (3) zu den Querachsen (4) konzentrische axiale Bohrungen und die Einrichtungen zum Verdinden durch diese Bohrungen verlaufende Stift (4) aufweisen.

3. Gliederkette nach Anspruch 1 oder 2, dadurch gekennzeichnet, daß die Endkanten der Außenglieder (5) jeweils konzentrisch zur benachbarten Querachse (4) und kriesabschnittförmig ausgebildet sind, das längs der Seitenränder (8) der Seitenplatte (2) verlaufende vorstehende Teil (7) an jedem seiner Enden ganz nahe bei der Endkante des benachbarten Außengliedes (5) endet und eine Dicke aufweist, die der Dicke des Außengliedes (5) entspricht.

4. Gliederkette nach einem der Ansprüche 1 bis 3, dadurch gekennzeichnet, daß die äußeren Umfangsränder der vorstehenden Teile (7; 7a) abgekantet sind.

5. Gliederkette nach Anspruch 3 oder 4, dadurch gekennzeichnet, daß das nach außen vorstehende Teil einen Längsstreifen (7a) an jedem Seitenrand (8) umfaßt.

6. Gliederkette nach einem der Ansprüche 1 bis 5, dadurch gekennzeichnet, daß das nach außen vorstehende Teil (7) sich im mittleren Längsbereich jeder Seitenplatte (2) über deren gesamte Weite erstreckt und seine Endkanten konzentrisch zur angrenzenden Querachse (4) konkav-kreisförmig ausgebildet sind, wobei der Spalt zwischen den sich zugewandten Endkanten von vorstehendem Teil (7) und benachbarten Außengliedern (5) jeweils über seine gesamte Erstreckung hinweg gleich groß ist.

7. Gliederkette nach einem der Ansprüche 1 bis 6, dadurch gekennzeichnet, daß die Buchsen (3) zylindrische Teile aufweisen, die zwischen den Seitenplatten (3) verlaufen und voneinander weniger weit entfernt sind als die Länge, über die hinweg sich das vorstehende Teil (7; 7a) entlang den Seitenrändern (8) erstreckt.

8. Gliederkette nach einem der Ansprüche 1 bis 7, dadurch gekennzeichnet, daß die integrale Struktur der Innenglieder (1) ein Kunststoffgußteil ist.

## Revendications

1. Chaîne à maillons comprenant un série de maillons intérieurs (1), de maillons extérieurs (5) et de moyens reliant lesdits maillons intérieurs et extérieurs (1; 5) afin qu'ils puissent pivoter sur des axes transversaux (4), chaque maillon intérieur (1) possédant une structure monobloc comprenant deux flasques (2) ayant des bords latéraux supérieur et inférieur (8) et deux douilles (3) s'étendant entre les flasques (2) et centrées sur les axes transversaux (4), les maillons extérieurs adjacents (5) ayant des bords extrêmes espacés afin de permettre le pivotement, et une partie (7; 7a) faisant saillie vers l'extérieur, formée d'une seule pièce avec chaque maillon intérieur (1), s'étendant dans la zone longitudinale centrale de chaque surface extérieure des flasques (2) et ayant des bords extrêmes faisant face aux bords extrêmes de maillons extérieurs adjacents (5), caractérisée en ce que cette partie (7; 7a) faisant saillie vers l'extérieur est prévue au moins à proximité de chacun des bords latéraux supérieur et inférieur (8) et est agencée de façon qu'un jeu soit établi entre les bords extrêmes face à face de la partie (7; 7a) en saillie et des maillons extérieurs articulés adjacents (5), respectivement.

2. Chaîne à maillons selon la revendication 1, caractérisée en ce que les douilles (3) présentent des alésages axiaux centrés sur les axes transversaux (4) et les moyens de liaison comprennent des broches (4) passant dans ces alésages.

3. Chaîne à maillons selon la revendication 1 ou 2, caractérisée en ce que les bords extrêmes des maillons extérieurs (5) ont une forme partiellement circulaire centrée sur l'axe transversal adjacent (4), la partie (7) en saillie, s'étendant le long des bords latéraux (8) du flasque (2), aboutissant à chaque extrémité à proximité immédiate du bord extrême du maillon extérieur adjacent (5) et ayant une épaisseur correspondant à l'épaisseur du maillon extérieur (5).

4. Chaîne à maillons selon l'une quelconque des revendications 1 à 3, caractérisée en ce que les périmètres extérieurs des parties (7; 7a) en saillie sont chanfreinés.

5. Chaîne à maillons selon la revendication 3 ou 4, caractérisée en ce que la partie faisant saillie vers l'extérieur comprend une nervure (7a) le long de chaque bord latéral (8).

6. Chaîne à maillons selon l'une quelconque des revendications 1 à 5, caractérisée en ce que la partie (7) faisant saillie vers l'extérieur s'étend sur toute la largeur de la zone longitudinale centrale de chaque flasque (2) et les bords extrêmes de la partie (7) en saillie ont une forme circulaire concave centrée sur l'axe transversale adjacent (4), le jeu entre les bords extrêmes face à face de la partie (7) en saillie et des maillons extérieurs adjacents (5) étant uniforme sur toute son étendue.

7. Chaîne à maillons selon l'une quelconque des revendications 1 à 6, caractérisée en ce que les douilles (3) comprennent des parties cylindriques s'étendant entre les flasques (3) et espacées d'une distance inférieure à la longueur de l'étendue le la partie (7; 7a) en saillie le long des bords latéraux (8).

8. Chaîne à maillons selon l'une quelconque des revendications 1 à 7, caractérisée en ce que la structure monobloc des maillons intérieurs (1) est moulée en matière plastique.

# FIG. 1

# FIG. 2

# FIG. 3

# FIG. 4

# FIG. 5

# FIG. 6